# EUROPEAN PATENT APPLICATION

(11) **EP 3 477 558 A1**
(43) Date of publication of application: **01.05.2019**
(21) Application number: 17198412.3
(22) Date of filing: 25.10.2017
(51) Int. Cl.: G06Q 10/00, G06Q 10/06

(54) **METHOD FOR THE MANAGEMENT OF A TECHNICAL SYSTEM AND MANAGED TECHNICAL SYSTEM**

(71) Applicant: Reamis AG, 6340 Baar (CH)
(72) Inventor: SMITH, Justin, 8051 Zürich (CH); THELEN, Lutz, 6332 Hagendorn (CH); TANNER, Alain, 8803 Rüschlikon (CH)
(74) Representative: Rutz & Partner

(57) **Abstract**

The method, which serves for the management of a technical system that is equipped with
a) at least one managed system module (11,12,13) for which status data are provided;
b) a status server (2) designed for receiving the status data stablished for the at least one managed system module (11,12,13); and
c) at least one transaction server system (34) designed for executing transactions, comprises the steps of
d) the status server (2) receiving, storing and updating status data delivered for the at least one managed system module (11,12,13);
e) the status server (2) forwarding current status data or data relating to status changes to the transaction server system (34); and
f) the transaction server system (34) using the forwarded status data for creating an electronic offer (Oa, Os) or using the forwarded data relating to status changes for executing an electronically executable contract (Ca, Cs) that comprises a program that accepts status data or data relating to status changes as input data and creates output data as defined by the executable program.

## Description

The present invention relates to a method for the management of a technical system that comprises at least one fixed or mobile system module and to a technical system that is managed according to the inventive method.

### BACKGROUND OF THE INVENTION

Management of technical systems, such as public and private buildings with all fixed or mobile equipment installed typically requires extensive administrative control with considerable resources including internal and external personnel. Technical systems may for example include buildings, a car park with numerous vehicles which are owned by individuals and are controlled and managed by a third party or service provider. A technical system may also comprise a production site with capital equipment, such as machines and conveyors.

Technical systems regularly require maintenance or repair. Organising maintenance and repair of a large system possibly including numerous system modules is a time-consuming administrative task. Moreover, between the occurrence, detection, report and correction of a system fault often considerable delays occur. Delays and costs are often also caused by unreliable technical information, e.g. information which is based on incorrect communication between members of the staff. Furthermore, underlying causes of technical problems are often not detected, so that a malfunction may repetitively occur. Causes of insufficient system behaviour will usually not get detected due to the intransparency of complex technical interactions.

Still further, optimising maintenance and repair processes by determining the root causes of malfunctions is often neglected or even impossible. Coordination of maintenance work or repair work is often insufficient so that costs arise which could be avoided, if coordination had been optimal. Due to the lack of reliable information, unnecessary maintenance work may often be performed, thus causing costs without providing benefit.

Controlling and operating technical systems therefore typically requires considerable efforts and time as well as actions or interactions of internal and external personnel. Installed systems and equipment and related items need to be actuated and checked regularly. The status of the technical system is often unknown, so that use or transfer of the technical system or system modules thereof, is only possible with a considerable time delay and efforts for establishing the required information in advance.

Furthermore, in the event that the status of a technical system has not properly been established and the performance of the technical system is below expectation, the new proprietor or user of the technical system may refuse payment by claiming that contractual conditions were not met.

Alternatively the technical systems may be perfectly in order and a tenant or new proprietor may still refuse contractual payment by claiming that services or functionalities of a system have not been present or have been insufficient. Counteracting such fraudulent behaviour has typically been difficult, time-consuming or even impossible.

Today, management of technical systems, including operation, maintenance, repair and transfer, is therefore rather inefficient and costly, so that such technical systems often cause high costs and yield little profit or even cause losses.

### SUMMARY OF THE INVENTION

It is therefore a primary object of the present invention to provide an improved method for the management of a technical system and an improved technical system managed according to the inventive method.

Particularly, it is an object of the present invention to provide an improved method that allows management of multifaceted and complex technical systems with reduced effort and increased accuracy and reliability.

The inventive method shall facilitate all aspects of management of the technical system, such as operation, maintenance, repair, handling /or and transfer of the technical system or related system modules, preferably without any human administrative support.

Further, the inventive method shall support spontaneous and accurate identification of system statuses.

By applying the inventive method administrative overhead for managing the technical system shall significantly be reduced. Use of internal and external personnel shall efficiently be administered so that tasks can properly be identified, reported and efficiently be executed.

Most preferably, management of the technical system shall autonomously or at least in important aspects autonomously be performed so that human support can be minimised.

The inventive method shall further facilitate the analysis of the technical system and its performance, so that operation, maintenance, repair and handling can be improved and hidden causes of malfunctions or hidden system deficiencies can be identified and removed. Hence, engagement of third parties particularly for maintenance purposes shall be facilitated and optimised. Third parties shall preferably automatically receive accurate and reliable status information required for making decisions, e.g. for preparing technical actions and means, such as spare parts. Related costs and administrative work shall be reduced or even avoided. Most preferably, the complication is effected between the inventive technical system and technical systems of third parties, which interact automatically and without human intervention.

Furthermore, interaction with third parties shall be placed on a new basis so that customer acceptance can be improved and fraudulent behaviour of individual system users can be excluded.

The above and other objects of the present invention are achieved by a method for the management of a technical system as defined in claim 1 and a technical system managed according to the inventive method as defined in claim 15.

The method, which serves for the management of a technical system that is equipped with
a) at least one managed system module, such as a building or a part thereof, for which status data are provided;
b) a status server designed for receiving the status data stablished for the at least one managed system module;
c) at least one transaction server system designed for executing transactions, particularly but not only technical transactions,
   comprises the steps of
d) the status server receiving, storing and updating status data delivered for the at least one managed system module;
e) the status server forwarding current status data or data relating to status changes to the transaction server system; and
f) the transaction server system using the forwarded status data for creating an electronic offer or using the forwarded status data or data relating to status changes for executing an electronically executable contract that comprises a program that accepts status data or data relating to status changes as input data and creates output data as defined by the program in order to respond to the reported status data and status changes.

According to the invention status data is collected for the at least one system module, e.g. a building or an apartment, and stored in a status server. New data relating to the status of the system module is automatically collected, e.g. sensed by sensors, with which for example temperatures, air purity, humidity, water levels, electricity, brightness in a room or space, status of security equipment such as status of locks and safety equipment, status of the heating system and energy supplies, condition of masonry and painting are measured.

The collected status data represent the at least one system module or essential features of the at least one system module.

In a preferred embodiment static status data are provided for the at least one managed system module, such as static status data originating from building information modelling (BIM) processes applied during construction of the at least one managed system module. These static status data, which typically relate to the structure of the at least one system module, are ideally invariable but may change or degrade in time due to external influences, such as weather conditions, earthquakes, or ageing of building materials or equipment. Status and status changes of relevant parts of the system modules are measured by means of sensors.

In addition or alternatively dynamic status data are provided for the at least one managed system module that are measured by means of sensors installed in the at least one managed system module. These dynamic status data, which typically relate to switchable equipment and installations, such as locks and light switches, may change during operation or use of the at least one managed system module. Hence, changes are considered normal if given rules or restrictions are not violated. Such rules may vary in time of the day or year.

Preferably, all relevant features of the at least one system module are collected and archived.

Most preferably, based on the static status data and/or the dynamic status data a static and/or dynamic system model for the at least one managed system module it is established. In the event that building information modelling (BIM) was used for the construction of the at least one system module, then the data of this BIM-process can be transferred to the status server and used for modelling. Preferably a static system model and/or a dynamic system model are established for the related system module.

A system model is the conceptual model as a result of system modeling that describes and represents a system. A system preferably comprises multiple views such as planning, requirement, design, implementation, deployment, structure, behavior, input data, and output data views. A system model is required to describe and represent all these multiple views (https://en.wikipedia.org/wiki/System_model). Of primary importance for BIM-modelling are the views planning, requirement and design. For the models established according to the inventive method the data views structure and/or behaviour and/or input data and output data are of primary importance. Complexity of the model is scalable so that the system model can comprise one static or dynamic element with one or more input parameters and one or more output parameters. E.g., the models of the system modules may be limited to a door lock defining the structure of the model with an input signal for opening and closing the door lock and with an output signal, e.g. a sensor signal, indicating the status of the door lock "open" or "closed". The behaviour of the system model would be for example a function of the door lock representing the change of the output signal in time, when the input signal is applied. It could therefore be observed, whether the door lock is operating correctly by opening or closing and by executing this function in given time limits. The system module may comprise a further element, such as a heating system near the control door, which is interlinked with the door lock and is only active when the door is unlocked. The input signal to the system module for unlocking the door would therefore have two output signals, namely an output signal from the door lock indicating "open" status and an output signal from the heating system indicating "active" status. In this way the number of elements contained in the system module and their interactions can be increased as desired.

A static system model represents the ideally invariant structure of the system module. A dynamic system model represents the behaviour of the system module during use and operation with all allowable system model changes. Both alternatives can individually be used by the inventive method for advantageously managing the system module. With rules and thresholds the limits of change of the static and/or dynamic system model are preferably defined so that for been status changes can be detected and corrected.

As soon as static status data and/or dynamic status data and/or a system model derived therefrom are established, it is decided what features are essential and need to be monitored based on given rules and thresholds. Depending on the position and environment of the system module, these essential features may be different. Then the essential features are monitored by sensors, which provide static status data or dynamic status data. Preferably, the essential features and the required sensors for measuring the essential features are already determined in the planning phase, e.g. during the execution of BIM processes, and before the construction of the system module.

After initialisation of the managed system the status server possesses preferably basic information for all system modules, preferably images or modules representing the system modules in all relevant aspects. Status of the system modules is then automatically updated and enhanced in real time or time intervals as defined.

The owner of the managed system has therefore always the complete overview over all relevant aspects of the managed system and system modules without the requirement of extensive administrative support. The owner of the managed system can therefore spontaneously initiate transactions for the managed system and system modules based on reliable information.

System modules may be larger units, such as individual buildings of a building complex, but also a fraction thereof, such as a garage or an individual apartment. Typically system modules are entities, which serve a defined purpose and provide corresponding functionalities. E.g., an apartment may be defined by its static structure, dimensions and equipment and/or by functions provided for this apartment. Static features of the system module or apartment may be the number, size and materials of the rooms. Dynamic features are for example status of devices used for heating, energy supply, air conditioning and entrance control, including controllable switches, valves and locks.

Static features will typically not change within short periods of time. However, quality of materials will degrade in time, possibly influenced by environmental conditions. The system model of the system modules relating to static features will also be rather static but will also degrade in time. Tools for measuring the status of items relating to static features are for example optical sensors, e.g. used for measuring colour changes, humidity sensors for measuring the humidity of the masonry, temperature sensors for measuring temperature differences and isolation of the masonry and a timer for measuring ageing of the items. However, static features not only change due to ageing but also due to the impact of forces, such as forces with natural causes such as earthquakes, weather conditions with excessive sunshine or rain, but also forces applied by intruders, which for example cause damage to doors and windows when illegally entering a building. Sensors may therefore detect unusual vibrations, breakage of windows and doors are lock systems. Still further, items relating to static features may be affected by water and fire, which may be detected by further sensors.

Status of items representing dynamic features will typically change gradually or stepwise in time between different levels or two or more states. For such levels and states limits and boundaries may be defined that preferably depend on time of the day, time of the year, season and weather conditions. Tools for measuring the status of items relating to dynamic features are for example, optical sensors, e.g. for measuring light conditions, temperature sensors for measuring the room temperature, sensors for detecting the states of electrical switches, sensors for detecting the state of a lock, sensors for measuring the flow of water and energy and sensors for measuring the air quality. The system model of the system modules relating to dynamic features will therefore typically exhibit numerous rapid changes.

According to the invention, both models, the system model representing static features and the system model representing dynamic features, and/or the related static status data or dynamic status data, can individually be used for facilitating management of the system. However, in a preferred embodiment the static and dynamic models and static and dynamic status data are used in combination.

Since all relevant information about the managed system is available in the status server, transactions relating to the managed system can be initiated at any time. Electronic offers can therefore be established without delay and provided with complete and accurate information about the transaction object, e.g. a system module or building. Such electronic offers can be published on an Internet based platform and can be accepted by a third party, preferably by signing the electronic offer with a private key of a public-key cryptosystem, such as the public key infrastructure described in [1], US4405829 or in [2], US6738912B2.

Hence, in preferred embodiments, the inventive method uses a public-key cryptosystem, which provides enciphered communication between arbitrary pairs of people, without the necessity of their agreeing on an enciphering key beforehand. The system allows creating a recognizable, unforgeable, document-dependent, digitised signature for a document whose authenticity the signer cannot deny later. The RSA cryptosystem is the most widely used public-key cryptosystem which allows using private-keys and corresponding public-keys interchangeable as encryption or decryption keys, thus providing secrecy and authenticity on a secure channel between two parties A and B with no need for additional keys. However, the present invention is not limited to this system.

When placing the electronic offer primarily authenticity and not secrecy is required. Therefore, the owner will sign the electronic offer with his private key and a third party will be able by means of the public key of the own to verify authenticity of the person placing the electronic offer. Vice versa the third party, who accepts the offer, will preferably sign the offer with his private key, so that the owner can authenticate the third party who has accepted the offer.

As described below, for an accepted offer, preferably an electronic contract or an electronically executable contract is created, which can advantageously be used in conjunction with the inventive method. For system modules that are sold, typically an electronic contract will be established, that provides proof that the transaction has been accepted by both parties. In the event that the transaction object has completely been described in the electronic offer, then the electronic offer signed by both parties can simply be converted into a contract by replacing the term "offer" with the term "contract".

In the event that the electronic offer related to lease or maintenance work of the apartment, then preferably an electronically executable contract is generated that is active as long as the contractual binding with at least one continuing obligation is in place. With the electronically executable contract actions and fulfilment of continuing obligations of the contractual partners can advantageously be controlled.

Hence, the owner can decide that a first system module shall be sold, that a second system module shall be leased to a third party and that for a third system module an offer or request for maintenance shall be published. All information relating to the concerned transaction object can immediately be entered into the electronic offer and later into the electronic contract or into the electronically executable contract. The apartment, which is for sale or lease or which requires maintenance, and its current status, can completely, accurately and correctly be defined in the electronic offer. Workload is taken off the administration, which in principle does not need to verify the offer.

In a preferred embodiment status data reported to the status server are compared with archived data, e.g. with a stored system model, in order to detect status changes. Reported status data and detected status changes are then used for executing an electronically executable contract that comprises a program that accepts status data or data relating to status changes as input data and creates output data as defined by the program for taking a defined action.

Electronically executable contracts are preferably based on electronic offers that were accepted. Alternatively the electronically executable contract can also be created in a different way, e.g. based on a hand written contract.

If for example, an offer has been placed for regular maintenance work for an apartment, and has been accepted by a service provider, the electronically executable contract can be created by adding a suitable program, if not already present in the contract offer.

After the electronically executable contract has been established and implemented, dynamic status data and/or static status data or data relating to detected status changes are provided to the contract as input data, which then provides output data for initiating actions as agreed in the contract.

Preferably, communication channels are provided for the electronically executable contract to communicate with status servers or control systems, which control the contractual transaction object or the related system module, respectively.

The electronically executable contract may for example process different input data combined are individually and may output combined or individual output data. In the event of a reported malfunction of the system module, the electronically executable contract may provide output signals to a control system and to service provider in parallel.

Output signals may be provided for example
a) for preventive action, such as switching electric lighting, acoustical or optical signalling devices or closing or opening locks or valves; or
b) for corrective action, such as resetting, reprogramming, updating or readjusting control systems; or
c) for signalling purposes, such as switching electric lighting, acoustical or optical signalling devices; or
d) for security purposes, such as closing or opening locks or valves; or
e) for emergency actions, such as activating fire extinguishers.

For example, in the event that a failure of the heating system is reported by means of status change data, the electronically executable contract may lock specific doors and windows and may send a service request to the service provider who has signed the contract, which defines the related services.

Depending on the program rules, a change of status but also lack of a change of status, an event or the lack of an expected event may cause the program to provide defined output data. The programme is preferably Turing-complete so that all tasks can be defined and programmed inclusive recursive actions.

In a further preferred embodiment, data of status changes are provided with time and date, such as a timestamp, and external data relating to external or environmental conditions are collected, which are also provided with time and date, such as a timestamp. In a further step, data of internal status changes are interlinked with internal and/or external data, which correspond in time and preferably exhibit the same timestamp. Interlinked data are then analysed for evaluating root causes of deficient behaviour of the at least one system module. Hence, without additional effort it may easily be detected that status changes have occurred together with a specific external event. This process step provides valuable information, since based on the extended information root causes and not only symptoms can be corrected. Malfunctions may for example always occur in conjunction with bad weather conditions, indicating that system stability is insufficient.

In order to secure data against manipulation, the established status data and models and/or the established electronic offers and/or the established electronically executable contracts are preferably stored immutable in a secure centralised database or a secure distributed database using for example distributed ledger technology or blockchain technology.

### BRIEF DESCRIPTION OF THE DRAWINGS

Some of the objects and advantages of the present invention have been stated, others will appear when the following description is considered together with the accompanying drawings, in which:
- Fig. 1: shows an inventive system 1 with managed system modules 11, 12, 13, which is managed according to the inventive method by using a status server 2 and a transaction server system 43;
- Fig. 2: shows process steps and transactions taking place in the technical system 1 of Fig. 1, which relate to contractual maintenance of system module 11 by a third party 51;
- Fig. 3: shows process steps and two transactions taking place in the technical system 1 of Fig. 1, which relate to the contractual transfer of system module 12 to a third party 52;
- Fig. 4: shows process steps and transactions taking place in the technical system 1 of Fig. 1, which relate to contractual renting system module 12 to a third party T12; and
- Fig. 5: shows preferred steps for creating an electronic offer and an electronically executable contract.

### DETAILED DESCRIPTION OF THE PREFERRED EMBODIMENTS

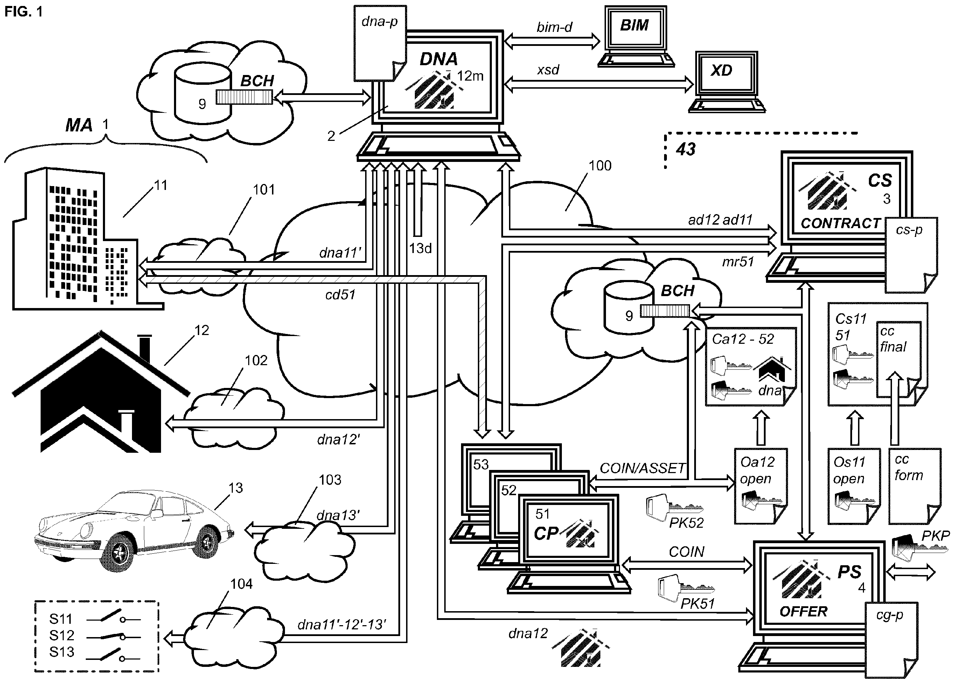

Fig. 1 shows an example of an inventive technical system 1 with managed assets MA or system modules 11, 12, 13, which communicate with a status server 2 (DNA) via cables or wired or wireless communication channels and/or wired or wireless networks 100, 101, 102, 103, 104, such as local area networks or wide area networks, e.g. Bluetooth networks and the Internet. The technical system 1 further comprises the transaction server system 43 designed for executing transactions that relate for example to the use, maintenance or transfer of the system modules 11, 12, 13.

The transactions server system 43 can be a single computer system with one, two or more software modules 3, 4 or can comprise one, two or more individual computer systems 3, 4, which communicate with one another. The transactions server system 43 shown in Fig. 1 comprises two modules or servers 3, 4 that are connected via communication channels with one another and with the status server 2. In a preferred embodiment, the status server 2 could also be incorporated as a module in the transaction server system 43, which is described below in detail. Fig. 1 shows a basic configuration of a managed system 1 which can be enhanced by any number of additional system modules. As shown, large entities and small entities with very different functionalities can be managed practically without limitations. Furthermore, the transaction server system 34 can be connected to the server of the proprietor of the managed system 1 or with the server of an accountant, consolidates financial data resulting from all financial transactions. For this purpose, the electronically executable contracts which preferably relate to continuing obligations may comprise a communication module designed for communicating financial data with the server of the accounting department.

In the present example, system module 11 is a larger building, with a plurality of departments and possibly a production site and a garage, which is also managed by means of the inventive method. System module 12 is a small house for at least one family. System module 3 is a car, that is parked in the garage of building 11 and which belongs to the car park of the managed system 1. Symbolically shown, illustrated as switches, are sensors s11, s12, s13, which are installed in appropriate places in the system modules 11, 12, 13. All three were created based on plans by architects and engineers so that information is available about these system modules 11, 12, 13, which has not been adequately used before.

Sensors may be optical sensors, at entrances or windows; level sensors, e.g. for water and oil; temperature sensors, e.g. installed in the heating system or in apartment rooms; fire sensors; sensors for the electrical system; sensors for installed transportation systems such as elevators; air purity sensors; sensors for doors and windows and lock systems; sensors for security and alarm systems. In preferred embodiments, intelligent sensors are used, which are equipped with a processor and a communication interface. These sensors may be connected via the communication interfaces with the above mentioned communication lines, communication channels, and/or communication networks to the status server 2 and may transfer static and dynamic status data dna11', dna12', dna13' to the status server 2 as illustrated by arrows.

Pre-existing plans and measured status data therefore provide valuable information about the managed objects 11, 12, 13 and are advantageously used by the present invention.

The status server 2 is equipped with at least one a program dna-p with which the collected status data can be processed, filtered, combined and/or stored. The collected status data can for example be combined with status data received via different communication channels, such as meta data or bim-data received from a BIM-server, in which building information modelling (BIM)-data used for the construction of the buildings 11 and 12 is stored (see https://en.wikipedia.org/wiki/Building information modeling). Further information can be the plans of the architect and information about the installed equipment, such as electrical appliances.

In addition, technical data 13d provided by manufacturer of system module 13, in the present example is downloaded from the Internet.

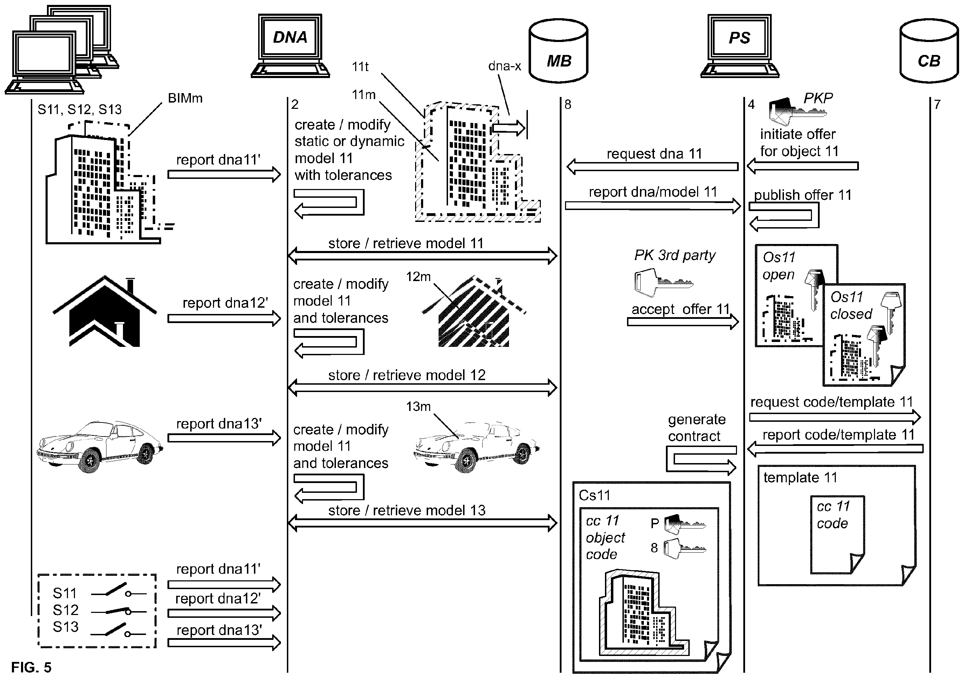

The received meta data and status data can be combined and processed to create virtual equivalents or models for the system modules 11, 12, 13 (see also Fig. 5). In Fig. 1, it is illustrated that the status server 2 is in progress of creating or updating the system model 12m of system module 12. Collected status data can then be stored or archived in a centralised or decentralised, i.e. distributed database 9 that for example uses distributed ledger technology or blockchain technology. The status server 2 therefore comprises all relevant information, so to say the DNA, of the system modules 11, 12, 13.

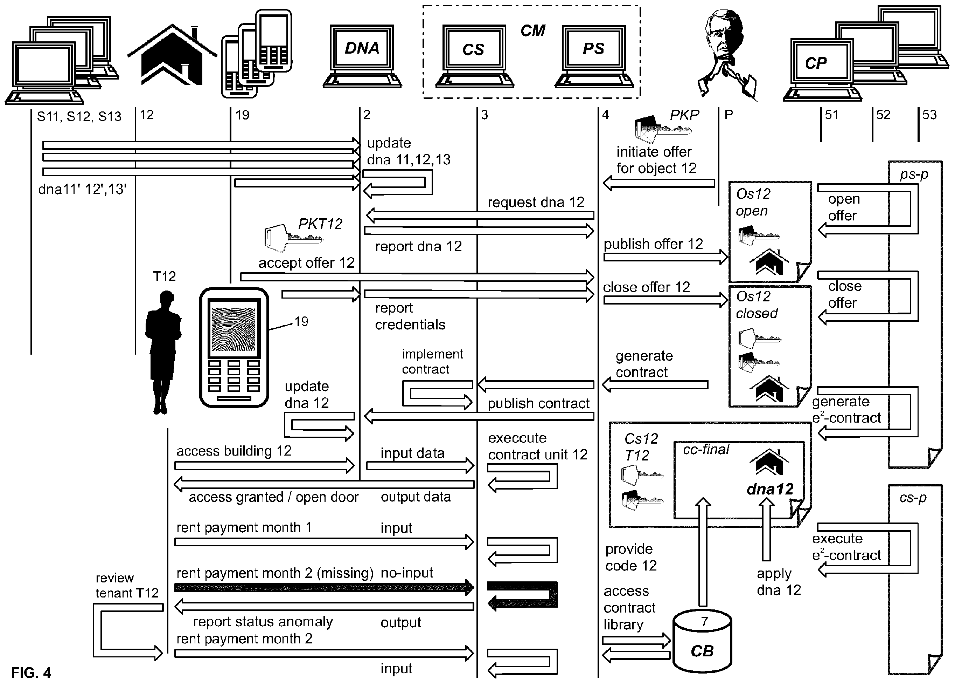

By comparing currently collected static and dynamic status data dna11', dna12', dna13' and previously stored static and dynamic status data dna11', dna12', dna13' or a system model 11 m derived therefrom (see Fig. 4), status changes are detected. Such status changes are preferably stored together with time and date, so that the complete history with sequences of changes is always available.

In addition, the status server 2 can download external status data xsd for present and future conditions, particularly environmental conditions from external status servers XD. Such external status data xsd, in particular specific events or significant changes are preferably also stored with time and date. In a further step data of internal status changes are interlinked with external data xsd, which correspond in time or exhibit the same timestamp. Interlinked data are then analysed for evaluating root causes of deficient behaviour of the at least one system module 11, 12, 13. Hence, without additional effort it may easily be detected that status changes have occurred together with specific external events. Prevention of unwanted status changes in the future this therefore facilitated.

Furthermore, in addition or alternatively thereto internal data, i.e. data that is collected internally in the at least one system module could advantageously be time stamped and interlinked with time stamped static status data and/or time stamped dynamic status data or time stamped status changes. Internal data could be collected by a different server ID or could be retrieved from the status server 2, i.e. the reported status data dna11, dna12, dna13. Therefore, at least one sort of time stamped status data and/or at least one sort of time stamped external data and/or at least one sort of time stamped internal data are interlinked with detected status changes. Such status changes are then analysed in order to discover internal or external events, which may have caused the status changes or malfunctions. The processes for detecting status changes, interlinking data and analysis of interlinked data are preferably executed by the status server 2. These processes may be executed independently from the other processes described below, e.g. in any technical system.

As described above, the managed system 1 comprises a transaction server system 43, which uses the data collected and processed by the status server 2 and which communicates for this and other purposes with the status server 2.

In the embodiment of Fig. 1 the transaction server system 43 comprises both, a publication server 4 (PS) and a contract server 3 (CS). Both servers 3, 4 complement one another. However, the inventive system could also be equipped either with the contract server 3 or the publication server 4 only. Furthermore, the status server 2, the publication server 3 and the contract server 4 could also be implemented as modules in a single program run on a single hardware unit, server or platform.

The publication server serves 4 serves for publishing contract offers, which when signed, could already result in a contract. The contract server 4 serves for managing and executing contracts, particularly electronically executable contracts, which define at least one continuing obligation of the contractual parties.

In the publication server 4 a program cg-p is stored, which allows generating an electronic offer Os, Oa for a transaction object or system module 11, 12, 13, for which status data dna12 or the system model 12m of the related system module 12 is downloaded from the status server 2. This status data dna12 or system model 12m forms the most relevant part of the subject matter of the electronic offer Os, Oa. The owner of the managed technical system 1 can therefore initiate an offer, e.g. for system module 12, for which the current status with all relevant data can be downloaded and entered into the electronic offer which is then legalised by the owner with his private key PKP.

It is shown that open electronic offer Oa12 is then published on an electronic platform such as publication server 4 and is accessible e.g. via the Internet 100 so that a potential contract partner 52 (CP) can accept the offer by signing the electronic offer Oa12 with his private key PK52. As soon as the electronic offer Os12 has electronically been signed by contract partner 52 the offer is closed and converted into contract Ca12-52. The resulting electronic document or contract Ca12-52 contains the private keys PKP, PK52 of both parties P, 52 as well as the subject matter of the contract Ca12-52. Contract Ca12-52 relates to the acquisition of system module 12, for which an exchange of coins and assets is made. The contract Ca12-52, which is preferably stored in a blockchain system, mentions the transferred asset and the amount paid in exchange. If both parties use a specific crypto currency, the related amount can be transferred with the closed contract Ca12-52 across the blockchain system. The related block contains therefore the corresponding transactions in the Merkel Tree, as for example described by Daniel Drescher, Blockchain Basics, apress 2017, (see pages 103 ff., steps 13 & 14). The block containing the transactions of the exchange of system module 12 against the agreed amount of crypto currency is then stored in the blockchain database 9. After contract Ca12-52 is secured immutable in the blockchain 9 the transactions are completed and the obligations fulfilled.

Fig. 1 shows a further example of a transaction with an offer Os11, which results after acceptance in a continuing obligation. The owner of the managed system 1 has decided that for building 11 a maintenance contract shall be closed. For this purpose electronic offer Os11 is initiated by the owner P, generated by the publication server 4, signed with the private key PKP of the owner P and then published. Service provider 51 accepts the offer by electronically signing the electronic offer Os11 with his private key PK51. Based on the accepted electronic offer Os11 an electronically executable contract Cs11-51 is preferably automatically generated by enhancing the accepted electronic offer Os11, which constitutes a contract, with an executable program that is adapted to the continuing obligation. For example, a form or template of code "cc-form" is taken and enhanced with the contractual details. The finalised code "cc-final" is then embedded in the electronically executable contract Cs11-51, which then is stored in contract server 3. In contract server 3 the stored electronically executable contracts Cs are handled by a program cs-p, that directs the received data about status changes to the concerned contracts Cs and that forwards the output data of the contracts Cs to the addressed destinations.

According to a preferred embodiment of the invention, the implemented electronically executable contract Cs11-51 is part of the control system or management system of the managed system 1. For example, it can be agreed that whenever status change 000x is reported to the contract Cs11-51, e.g. indicating that the heating has failed in building 11, then first output data is generated which is transformed to a control signal with which the heating system is restarted. In the event that status change 000x, indicating failure of the heating system, is reported again, then second output data is generated according to which service provider or contractual partner 51 is notified about the failure. The executable program is preferably Turing complete, so that any rule for handling input messages or status changes can be defined, e.g. by using loops and counters. The management processes may therefore automatically be executed without requiring intervention by personnel or staff of the managed system 1. At the site of the service provider 51 the output data received from the electronically executed contract Cs11-51 preferably triggers a service routine or further action in an electronic system. The service routine may automatically start communicating with the heating system of building 11 and perform maintenance actions as defined by the service provider 51. Most referral the managed system and the electronic system of the service provider 51 form a closed loop for correcting unwanted status changes or malfunctions.

The service routine may restart or deactivate a failed burner system and may activate an electric heating system instead. Hence, before maintenance personnel of service provided 51 reaches building 11 emergency services have been executed and heating services are provided to the apartments of building 11.

The inventive method allows precise and detailed reporting of events, e.g. malfunctions and accurate responses. The system is scalable and can be expanded to any desired resolution. Any item of the management system 1 or the system modules 11, 12, 13 can be added to the list of observed or managed items or can be added to a corresponding system model of the related system module. Furthermore, based on the information stored in the status server 2, any technical or non-technical transaction can be executed. Further, the use of reliable databases allows execution of these transactions with maximum security and least effort. Since the use of current blockchain systems is not free of costs, the inventive method will use blockchain systems only for data which is persistently relevant. The contractual partners may agree in the contracts, how the contracts will be stored. The parties may also use different filing systems or databases, such as the interplanetary filing system ipfs (see https://ipfs.io/).

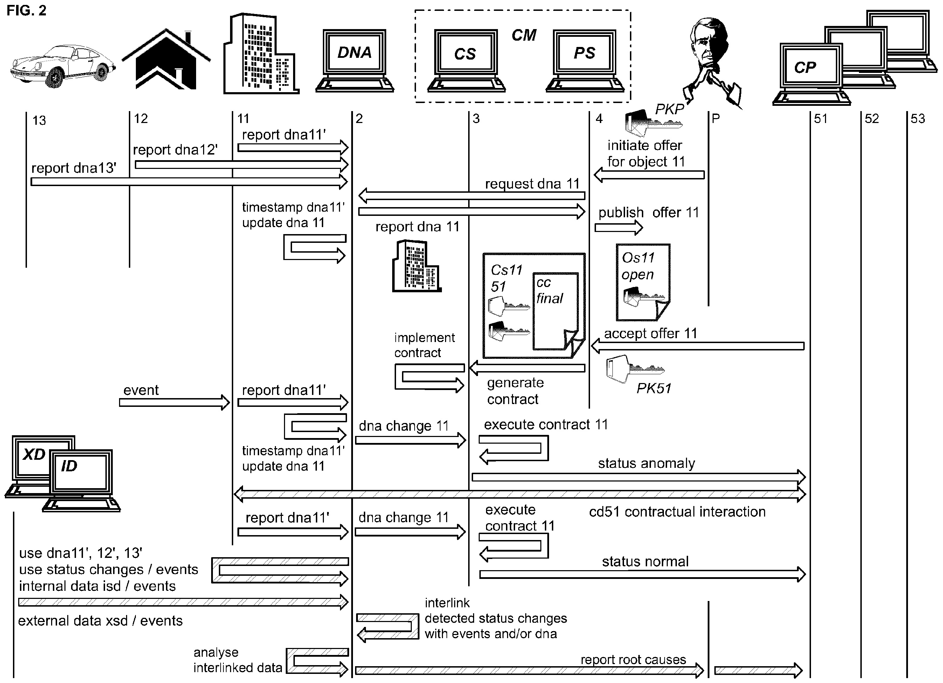

Below further examples of transactions executed in the inventive managed system 1 are explained with reference to Fig. 2 to Fig. 5.

Fig. 2 shows the creation of a service contract for the maintenance of system module or building 11 and the execution of the related electronically executable contract Cs11. It is shown that from the system modules 11, 12, 13 static and dynamic status data dna11', dna12', dna13' are forwarded to the status server 2, which updates the collected and consolidated status data dna11, dna12, dna13 or models for all system modules 11, 12, 13.

The apostrophe added to the reference numeral indicates that an individual element of status data is referenced, while the same reference numeral without apostrophe references the consolidated reference data, which may define the related system module in every detail.

At a point in time, the owner P of the managed system 1 initiates an offer that relates to the requirement of maintenance services for system module 11. It is for example offered that the apartments of building 11 shall be serviced whenever required for a specific monthly amount. For preparing the offer the publication server 4 requests consolidated status data dna11 or the system model derived therefrom for building 11 from status server 2, which possesses all relevant information about building 11 and which forwards the related information dna11 to the publication server 4. The publication server is then preparing and publishing the electronic offer Os11, which is approved and signed by the owner P and later on accepted by service provider 51, who signs the offer with his private key PK51. Offer Os11 is then closed and an electronically executable contract Cs11 is generated that is provided with an executable program, stored and implemented in the contract server 3. The implemented electronically executable contract Cs11 then controls the agreement between the parties P, 51.

At a later stage, possibly a few days later, triggered by an event, system module 11 reports status data dna11' or even a status change to the status server 2. The reported status data dna11' is preferably provided with a timestamp and used for updating the stored status data dna11. The status server 2 then reports a status change to the contract server 3, which executes the contract Cs11. The received status data is entered as input data to the program "cc-final" executed within contract Cs11, which forwards output data to the service provider 51 reporting a status anomaly in building 11.

In response to the service request, service provider 51 sends control data cd51 to the concerned part of building 11, e.g. to the heating system from which the status change originated. With the control data cd51 the malfunction is corrected, e.g. by loading a new firmware into the control system of the heating system.

Triggered by the event, that the heating system is operative again, status data dna11' is again reported to the status server 2, which sends a confirmation to service provider 51, that the status of building 11 is normal again.

Fig. 2 further shows that external status data that is provided with a timestamp, e.g. environmental data, and/or further internal status data that is provided with a timestamp, e.g. user data, which may be relevant to building 11, is also transferred to the status server 2, and interlinked with reported status data dna11', dna12', dna13' or related status changes. In regular intervals interlinked data is analysed in order to detect root causes for status changes, e.g. malfunctions. Consequently, without significant effort the managed technical system 1 will automatically point to root causes for malfunctions, which always occurred together with a specific external or internal event.

Management of the system modules 11 with respect to continuing obligations can therefore be done with least effort and further benefits.

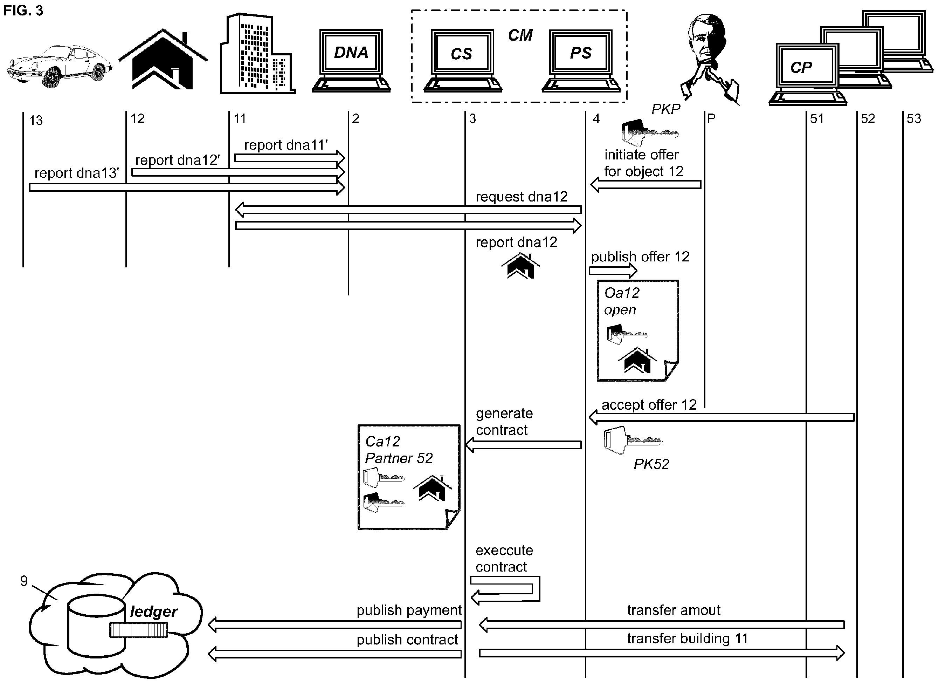

Fig. 3 shows the creation of a sales contract based on a technically accurate and readily available definition of technical system module or building 12. Again, the offer is initiated by the owner P. Status data dna12 is retrieved from the status server 2 and the electronic offer Oa12 is generated and published together with the specification or status information of building 12. Later on the offer is accepted by contractual partner 52, who signs the electronic offer Oa12 with his private key PK52. The electronic offer Oa12 is then converted into electronic contract Ca12, which contains the private keys of the contractual partners P, 52 and the specification of building 12 and the amount to be paid. The contract Ca12 is executed by publishing the contract Ca12, which contains two transactions, namely the transfer of the agreed amount from acquirer 52 to the former owner P and the transfer of the building 11 from the former owner P to the acquirer and new owner 52. Both transactions, which relates to high values, are preferably stored in the blockchain 9.

Fig. 4 shows the creation of a contract defining a rental agreement for system module or building 12. In this example it is illustrated that status data dna11', dna12', dna13', including sensor data are forwarded by data terminals S11, S12, S13 located in the system modules 11, 12, 13. Data terminals S11, S12, S13 represent or control numerous sensors or sensor systems, preferably intelligent sensor systems, installed the system modules 11, 12, 13, which preferably use a common data bus, such as a standardised metering bus. Again, the status server 2 receives the status data dna11', dna12', dna13' and updates the consolidated status data dna11, dna12, dna13 or models derived therefrom.

In the example shown in Fig. 4, owner P has decided to lease building 12 or an apartment thereof to a tenant. An offer is initiated accordingly and status data for building 12 or an apartment located in building 12 is downloaded from the status server 2. Based on the retrieved status data dna12 or system model, offer Os12 is generated containing all relevant information for building 12 and the monthly rental fee and further details if required. Then the electronic offer Os12 is published. This process is performed by a programme ps-p implemented in the publication server 2.

For the creation of electronic offers the publication server 2 preferably uses offer templates tailored to the types of contracts targeted. An offer template acts as a filter, which defines, which status data dna12 needs to be downloaded or used in the electronic offer. Hence, the download is preferably limited by the offer template to status data, which is relevant for the rental agreement. For this type of contract, typically static status data are downloaded, which define the rooms, windows, balconies, and the installed equipment. Status data for example relating to the current status of the installed equipment may however be excluded. Current status of the heating system is usually not relevant, since problem functioning of this system is guaranteed and arranged by the inventive method.

After publication the electronic offer Os12 it accepted by tenant T12, who signed the electronic offer Os12 by sending his private key PKT12 from his mobile station 19 to the publication server 2 and accordingly signing the electronic offer Os12, which by this act is legally converted into a contract. Further, from mobile station 19 all relevant credentials of tenant T12 can also be transferred to the status server 2 and/or the publication server 4. Such credentials preferably become part of the status data dna12 or system model of the related system module 12.

As shown in Fig. 4, the electronic offer Os12 is then closed by the publication server 2, i.e. the programme ps-p implemented therein. If the electronic offer Os12 has not been provided with executable code, then the closed electronic offer Os12 is not yet an electronically executable (e²) contract and needs to be established since the rental agreement constitutes at least two continuing obligations for the contractual partners P, T12.

It is illustrated that the electronically executable contract Cs12 is preferably also generated by the publication server 2, i.e. the programme ps-p implemented therein, and then implemented end executed in the contract server 3. For generating the electronically executable contract Cs12 executable code or contract template prepared for rental agreements is downloaded from a database 7 (contract library CB) and adapted to the subject matter of the offer or contract. That means that the contract template is finalised by entering the related status data dna12. The contract template preferably defines standard agreements for rented property, e.g. including monthly payment of an agreed amount and agreed services provided, such as monthly cleaning, heating with agreed minimum room temperatures, etc.. The corresponding variables are filled with status data dna12 and figures taken from the electronic offer Os12, including the credentials of tenant T12. Such credentials may include biometric data, such as a fingerprint, which is later used for access control.

The established electronically executable contract Cs12 is then implemented and executed in the contract server 3. It is illustrated that access is granted to tenant T12 who has authenticated herself, e.g. by providing a fingerprint or the private key. The fingerprint, which can be entered on the display of the mobile station 19, or the private key of tenant T12 is provided as input data to the electronically executable contract Cs12, verified according to the regulations defined in the contract Cs12 and corresponding output data is forwarded for granting access to tenant T12 and unlocking the entrance door of building 12.

Furthermore it is illustrated that the programme "cc-final" of the electronically executable contract Cs12 contains a programme loop, which verifies monthly payment of the rental fee and reports anomalies if payment has not been received. In the event that the electronically executable contract Cs12 is stored and executed within the blockchain system 9 (see Fig. 3), then monthly payments can be made by executing transactions within the blockchain system 9. Tenant T12 can transfer an agreed amount of a cryptocurrency monthly, which transaction is reported to the electronically executable contract Cs12, controls regular payment with a loop and a timer.

All interactions with the system modules 11, 12, 13 and the contractual partners for all continuing obligations can therefore easily be managed and controlled by the inventive technical system 1. The described processes from initiating the electronic offer Os12 to generating the electronically executable contract Cs12 can be executed within seconds without human interaction, if tenant T12 is online, when the electronic offer Os12 can immediately be accepted after publication.

Fig. 5 shows preferred steps for creating an electronic offer and an electronically executable contract. It is shown that for status data dna11', dna12', dna13' reported for the system modules 11, 12, 13 the status server 2 generates a corresponding system model 11 m, 12m, 13m. After an offer has been initiated by the owner for building 11, the system model 11m for building 11 is downloaded from the status server and, possibly pre-filtered, is entered into the electronic offer Os11. At a later stage the electronic offer Os11 is accepted and signed with a private key by a third party. Offer Os11, which has become an electronic contract, is then converted into an electronically executable contract Cs11 by adding contract code cc11 that is contained in a template 11 and that is modified according to the transaction object with related dna11 or the system model 11 m. The private keys of the contract parties may be entered as values for corresponding variables.

Fig. 5 further shows that for the status data dna11, i.e. the system model 11 m threshold values 11t are defined which are symbolically shown as an envelope enclosing system model 11 m. The system model 11 m may for example defined that temperatures in the building need to be in the range between 20°C and 22°C. A deviation of 1°C (threshold 1°C) from this temperature range measured by temperature sensing S11 could therefore result in a report of a status change to the contract server 3.

Hence, status data dna-x, which are exceeding the threshold are detected as status changes. Hence, system model 11 m consists in this embodiment of all status data combined with related tolerances or thresholds, which should not be exceeded. This system model 11 m with the defined tolerances is entered into the electronically executable contract Cs11. Status changes can therefore be detected in the status server 2 or in the contract server 3, whereafter corrective action is initiated.

Above, simple processes for establishing and accepting an offer and for generating a contract, in particular an electronically executable contract, have been described. A further advantage of the inventive method and system is however that even complex negotiations can easily be executed with changing definitions for payment and services and requests for further information, which can automatically be provided. Each offer may be replied to with a counter offer preferably signed each time with the private key of the concerned party.

### LIST OF REFERENCES

[1] US4405829
[2] US6738912B2
[3] Daniel Drescher, Blockchain Basics, apress 2017

## Claims

1. Method for the management of a technical system that is equipped with
a) at least one managed system module (11,12,13) for which status data are provided;
b) a status server (2) designed for receiving the status data established for the at least one managed system module (11,12,13); and
c) at least one transaction server system (34) designed for executing transactions;
comprising the steps of
d) the status server (2) receiving, storing and updating status data delivered for the at least one managed system module (11,12,13);
e) the status server (2) forwarding current status data or data relating to status changes to the transaction server system (34); and
f) the transaction server system (34) using the forwarded status data for creating an electronic offer (Oa, Os) or using the forwarded status data or data relating to status changes for executing an electronically executable contract (Ca, Cs) that comprises a program that accepts status data or data relating to status changes as input data and creates output data as defined by the executable program.

2. Method according to claim 1, comprising the steps of
a) providing static status data for the at least one managed system module (11,12,13), such as static status data originating from building information modelling processes applied during construction of the at least one managed system module (11,12,13) and measuring static status data by means of sensors (s11,s12,s13) installed in the at least one managed system module (11,12,13); and/or
b) providing dynamic status data for the at least one managed system module (11,12,13), such as dynamic status data measured by means of sensors (s11,s12,s13) installed in the at least one managed system module (11,12,13).

3. Method according to claim 1 or 2, comprising the steps of based on the static status data and/or the dynamic status data creating a static and/or dynamic system model (11 m) for the at least one managed system module (11).

4. Method according to claim 1, 2 or 3, comprising the steps of providing a publication server (4) in the transaction server system (34) that receives status data or the system model (11 m) derived therefrom for the at least one system module (11,12,13) and that, initialised by an authorised person and based on the received status data or the system model (11 m), establishes an electronic offer (Oa12, Os11) for the at least one system module (11,12,13), which relates to a transaction such as use, acquisition or service of the at least one system module (11,12,13), and which is accepted by a third party (T12; 51, 52, 53) preferably by electronically signing the electronic offer (Oa, Os).

5. Method according to 1 of the claims 1-5, comprising the steps of providing a contract server (3) in the transaction server system (34) which receives, preferably provided by the publication server (4), electronically executable contracts (Ca, Cs) that accept status data or data relating to status changes as input data and that provide output data as defined by an electronically executable program contained and implemented in the electronically executable contract (Ca, Cs).

6. Method according to one of the claims 1-5, comprising the steps of
a) a person (P) authorised for executing transactions for the technical system initiating an electronic offer (Oa, Os) relating to a transaction such as use, acquisition or service of the at least one system module (11,12,13);
b) the publication server (4) retrieving status data or the system model (11m) derived therefrom for the at least one system module (11,12,13) from the status server (2);
c) the publication server (4) generating an electronic offer (Oa, Os) for the at least one system module (11,12,13), said electronic offer (Oa, Os) containing related status data or the system model (11m) derived therefrom;
d) the publication server (4) publishing the electronic offer (Oa, Os);
e) a third party (T12; 51, 52, 53) accepting the electronic offer (Oa, Os); and
f) the publication server (4) closing the electronic offer (Oa, Os).

7. Method according to claim 7, comprising the steps of
after the acceptance of the electronic offer (Oa, Os) the transaction server system (34) automatically generating a corresponding electronically executable contract (Ca, Cs) that is implemented in the contract server (3).

8. Method according to one of the claims 1 - 7, comprising the steps for automatically generating the electronically executable contract (Ca, Cs) of
a) converting an accepted electronic offer (Oa, Os) that already contains or is provided with an executable program (cs-p) into an electronically executable contract (Ca, Cs) that is implemented in the contract server (3); or
b1) retrieving data from an accepted electronic offer (Oa, Os), which relates to the acceptance of the electronic offer (Oa, Os) by the contractual partners such as the authorised person (P) and the third party (T12; 51, 52, 53) who have signed the electronic offer (Oa, Os);
b2) retrieving executable code or a contract template, which corresponds to the initiated transaction or electronic offer (Oa, Os), from a contract database (7);
b3) retrieving status data or the system model (11 m) derived therefrom for the at least one system module (11,12,13) from the accepted electronic offer (Oa, Os) or from the status server (2);
b4) with the status data and/or the system model (11 m) adapting the retrieved executable code and/or the contract template to the at least one system module (11,12,13); and
b5) implementing the electronically executable contract (Ca, Cs).

9. Method according to one of the claims 1-8, comprising step of
a) using an asymmetrical cryptographic system for executing transactions, which provides key pairs with a private key and a public key;
b) providing a key pair to at least one person authorised for electronically signing transactions related to the technical system, and
c) the authorised person with his private key electronically signing the electronic offers (Oa, Os) and/or the electronically executable contracts (Ca, Cs).

10. Method according to one of the claims 1 - 9, comprising the steps of
a) comparing current status data the system model (11 m) derived therefrom with archived status data or the system model (11 m) derived therefrom for the at least one system module (11,12,13);
b) detecting status changes preferably by comparing a difference between the current status data or the system model (11 m) derived therefrom and the archived status data or the system model (11 m) derived therefrom with a threshold (11t);
c) forwarding data of detected status changes to the contract server (3);
d) the contract server (3) entering data of status changes as input data to the program (cs-p) contained in the electronically executable contract (Ca, Cs) that generates output data as defined by the executable program (cs-p).

11. Method according to one of the claims 1 - 10, comprising the steps of
a) providing detected status changes with time and date, such as a timestamp;
b) collecting external data, such as environmental data, and providing such external data with time and date, such as a timestamp; and
c) interlinking detected status changes and external data with corresponding time and date and analysing interlinked data for evaluating root causes of deficient behaviour of the at least one system module (11,12,13).

12. Method according to claim 10 or 11, comprising the steps of
the electronically executable contract (Ca, Cs) providing output data in response to the internal status changes or external status changes that serve as control signals
a) for preventive action, such as switching electric lighting, acoustical or optical signalling devices or closing or opening locks or valves (111); or
b) for corrective action, such as resetting or readjusting control systems (111); or
c) for signalling purposes, such as switching electric lighting, acoustical or optical signalling devices (111); or
d) for security purposes, such as closing or opening locks or valves (111).

13. Method according to claim 10, 11 or 12, comprising the steps of
the program (cs-p) of the electronically executable contract (Ca, Cs) recursively expecting input data and generating corresponding output data, if the expected input data has not been received within a given time period.

14. Method according to one of the claims 1 to 13, comprising the steps of
a) the status server (2) storing status data or models derived therefrom in a centralised and/or distributed database that uses distributed ledger technology or blockchain technology database; and/or
b) the publication server (4) storing the electronic offers (Oa, Os) in a centralised and/or distributed database by using distributed ledger technology or blockchain technology database; and/or
c) the contract server (3) storing the executable contracts in a centralised and/or distributed database that uses distributed ledger technology or blockchain technology.

15. Managed technical system that is equipped with
a) at least one managed system module (11,12,13) for which status data are provided;
b) a status server (2) designed for receiving status data established for the at least one managed system module (11,12,13); and
c) at least one transaction server system (34) designed for executing transactions;
which technical system is managed with a method according to one of the claims 1-14.
